(19) Europäisches Patentamt European Patent Office Office européen des brevets

(11) **EP 3 887 801 B1**

(12) **FASCICULE DE BREVET EUROPEEN**

(45) Date de publication et mention de la délivrance du brevet:
**30.08.2023 Bulletin 2023/35**

(21) Numéro de dépôt: **19839342.3**

(22) Date de dépôt: **22.11.2019**

(51) Classification Internationale des Brevets (IPC):
**G01N 21/3504** *(2014.01)* **G01N 21/359** *(2014.01)*

(52) Classification Coopérative des Brevets (CPC):
**G01N 21/3504; G01N 2201/06186; G01N 2201/0696**

(86) Numéro de dépôt international:
**PCT/FR2019/052784**

(87) Numéro de publication internationale:
**WO 2020/109708 (04.06.2020 Gazette 2020/23)**

(54) **CAPTEUR DE GAZ COMPORTANT UNE SOURCE DE LUMIÈRE IMPULSIONNELLE**

GASSENSOR MIT EINER GEPULSTEN LICHTQUELLE

GAS SENSOR COMPRISING A PULSED LIGHT SOURCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2018 FR 1871955**

(43) Date de publication de la demande:
**06.10.2021 Bulletin 2021/40**

(73) Titulaire: **Elichens 38040 Grenoble (FR)**

(72) Inventeur: **DUPREZ, Hélène 38170 SEYSSINET-PARISET (FR)**

(74) Mandataire: **INNOV-GROUP 310, avenue Berthelot 69372 Lyon Cedex 08 (FR)**

(56) Documents cités:
**DE-A1- 10 332 515     JP-A- 2004 198 301
US-A- 4 390 280     US-A1- 2008 114 552
US-B1- 6 825 471**

EP 3 887 801 B1

**Description**

## DOMAINE TECHNIQUE

Le domaine technique de l'invention est l'analyse d'un gaz, en mettant en oeuvre une source de lumière de type corps noir ou corps gris et en mesurant une absorption d'une onde lumineuse émise par la source de lumière. L'invention concerne plus spécifiquement la source de lumière, et notamment la façon de la piloter.

## ART ANTERIEUR

Le recours à des méthodes optiques pour l'analyse d'un gaz est fréquent. Des capteurs permettent de déterminer la composition d'un gaz en se basant sur le fait que les espèces composant le gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer-Lambert. Ce principe permet une estimation de la concentration d'une espèce gazeuse présente dans le gaz.

Selon les procédés les plus courants, le gaz analysé s'étend entre une source de lumière et un photodétecteur, dit photodétecteur de mesure, ce dernier étant destiné à mesurer une onde lumineuse transmise par le gaz à analyser, l'onde lumineuse étant partiellement absorbée par ce dernier. La source de lumière est usuellement une source émettant dans l'infrarouge, la méthode utilisée étant usuellement désignée par le terme anglosaxon "NDIR détection", l'acronyme NDIR signifiant Non Dispersive Infra-Red. Un tel principe a été fréquemment mis en oeuvre, et est par exemple décrit dans les documents US5026992, WO2007064370.

La comparaison entre l'onde lumineuse en présence de gaz et l'onde lumineuse sans gaz permet de caractériser l'absorption du gaz. Il s'agit par exemple de déterminer une quantité d'une espèce gazeuse dans le gaz, selon la technologie désignée par le terme "NDIR par absorption".

Généralement, la source de lumière est une source impulsionnelle. Le photodétecteur de mesure délivre, à chaque impulsion, un signal dépendant de l'intensité de l'onde lumineuse transmise par le gaz. Le signal issu du photodétecteur est donc formé d'impulsions, dont l'amplitude dépend de l'absorption, par le gaz, de l'onde lumineuse émise par la source de lumière. Plus l'absorption est importante, plus l'amplitude est faible. Une mesure de l'amplitude des impulsions permet d'estimer l'absorption, cette dernière étant corrélée à la quantité de l'espèce gazeuse à laquelle l'absorption est attribuée. Ainsi, la mesure de l'amplitude permet d'évaluer la quantité de l'espèce gazeuse que l'on souhaite déterminer. Le signal délivré par le photodétecteur comporte des minima, en dehors des impulsions de la source de lumière, et des maximas, résultant d'une impulsion de la source de lumière. La mesure de l'amplitude peut être réalisée par une comparaison des maximas et des minimas, ou par une analyse spectrale du signal délivré par le photodétecteur.

Les impulsions de la source de lumière sont usuellement générées selon une fréquence de l'ordre du Hz. Lorsqu'un capteur est utilisé selon une longue période, par exemple plusieurs mois consécutifs, la source de lumière subit un vieillissement, ce qui se traduit par une diminution de l'amplitude des impulsions de l'onde lumineuse émise. C'est la raison pour laquelle certains dispositifs disposent d'un photodétecteur de référence, pour mesurer une amplitude de chaque impulsion dans une bande spectrale considérée comme étant non absorbée par le gaz. Le photodétecteur de référence peut également être tel qu'aucun gaz ne s'étend entre la source de lumière et le photodétecteur de référence. Le recours à un photodétecteur de référence permet d'estimer l'onde lumineuse qui atteindrait le photodétecteur sans être absorbée, tout en tenant compte d'une décroissance progressive de l'amplitude des impulsions de la source de lumière. Cela est par exemple décrit dans WO2018149799 ou dans WO2018162848. Dans le document DE 103 32 515 A1, diverses solutions techniques sont proposées pour retarder le vieillissement de la source de lumière comme fournir une tension de pilotage plus faible que la tension nominale, préchauffer la lampe, inverser le sens du courant de pilotage, utiliser une lampe à plusieurs filaments ou utiliser un condensateur limitant les pics de tension. Dans le document JP 2004 198301 A, le problème est résolu en augmentant la durée où la lampe est éteinte. Dans le document US 6 825 471 B1, la durée d'allumage de la lampe est réduite en sélectionnant l'augmentation maximale du signal lumineux émis par la lampe plutôt que sa valeur maximale comme valeur d'arrêt de la tension de pilotage. Dans le document US 2008/114552 A1, la constante de temps de la réponse lumineuse en réponse à une commande de pilotage en créneaux est réduite grâce à un traitement différentiel du signal mesuré. Le document US 4 390 280 A décrit une optimisation du pilotage d'une lampe susceptible d'être utilisée pour des mesures spectroscopiques permettant d'éviter les effets d'overshoot grâce à un signal de commande graduel.

L'inventeur propose de perfectionner les dispositifs actuels, de façon à retarder le vieillissement de la source de lumière et/ou à faciliter une éventuelle analyse spectrale réalisée sur les signaux résultant du photodétecteur.

## EXPOSE DE L'INVENTION

Un premier objet de l'invention est un procédé de mesure d'une quantité d'une espèce gazeuse présente dans un gaz, l'espèce gazeuse étant apte à absorber une lumière dans une bande spectrale d'absorption le procédé comportant les étapes suivantes :

a) disposition du gaz entre une source de lumière et un photodétecteur de mesure, la source de lumière étant apte à émettre une onde lumineuse, se propageant à travers le gaz vers le photodétecteur de mesure;

b) activation de la source de lumière pour illuminer le gaz, de façon que la source de lumière émette une impulsion lumineuse, la source de lumière étant de type corps noir ou corps gris ;

c) mesure, par le photodétecteur de mesure, d'une intensité, dite intensité de mesure, d'une onde lumineuse transmise par le gaz au cours de son illumination, dans une bande spectrale de mesure, comportant la bande spectrale d'absorption;

le procédé étant caractérisé en ce que l'étape b) comprend une alimentation de la source de lumière par un signal d'activation impulsionnel, le signal d'activation comportant des impulsions électriques, chaque impulsion électrique s'étendant entre un instant initial et un instant final, et chaque impulsion électrique comportant :

- une période initiale, s'étendant selon une durée initiale à partir de l'instant initial, au cours de laquelle le signal d'activation est porté à un niveau initial;
- une période nominale, postérieure à la période initiale, au cours de laquelle le signal d'activation est maintenu à un niveau nominal strictement inférieur au niveau initial, la période nominale ayant une durée nominale supérieure à la durée initiale.

La durée initiale peut être comprise entre 2 et 20 ms, et de préférence entre 5 ms et 15 ms. La durée nominale peut être comprise entre 20 ms et 150 ms et de préférence entre 50 ms et 100 ms.

La période nominale est consécutive de la période initiale : la fin de la période initiale correspond au début de la période nominale.

Selon un mode de réalisation, lors de la période initiale, le signal d'activation est maintenu au niveau initial durant la durée initiale.

Selon un mode de réalisation, la période nominale s'étend jusqu'à l'instant final.

Selon un mode de réalisation, la période nominale est suivie d'une période finale, au cours de laquelle le signal d'activation décroît, en dessous du niveau nominal, durant une durée finale, jusqu'à l'instant final. La durée finale peut être supérieure à la durée initiale. La durée finale peut être inférieure à la durée nominale. Selon ce mode de réalisation, la fin de la période nominale correspond au début de la période finale.

Au cours de la période finale, le signal d'activation peut décroître progressivement jusqu'à l'instant final, par exemple selon une fonction continue, par exemple linéaire ou sinusoïdale. La durée finale peut être comprise entre 10 ms et 100 ms, et de préférence entre 20 ms et 50 ms.

Un deuxième objet de l'invention est un capteur pour déterminer une quantité d'une espèce gazeuse dans un gaz, le capteur comportant :

- une source de lumière, configurée pour émettre une onde lumineuse se propageant vers le gaz, l'onde lumineuse s'étendant dans une bande spectrale d'absorption de l'espèce gazeuse, la source de lumière étant de type corps noir ou corps gris ;
- un photodétecteur de mesure, apte à détecter une onde lumineuse transmise par le gaz, à différents instants de mesure, dans une bande spectrale de mesure et à en mesurer une intensité, dite intensité de mesure;
- un générateur d'impulsion, configuré pour adresser un signal d'activation à la source de lumière, le signal d'activation étant formé d'impulsions, chaque impulsion comportant :

  - une période initiale, s'étendant selon une durée initiale à partir de l'instant initial, au cours de laquelle le signal d'activation est porté à un niveau initial ;
  - une période nominale, postérieure à la période initiale, au cours de laquelle le signal d'activation est maintenu à un niveau nominal strictement inférieur au niveau initial, la période nominale ayant une durée nominale supérieure à la durée initiale.

Selon un mode de réalisation, le capteur comporte :

- un photodétecteur de référence, configuré pour mesurer une intensité, dite intensité de référence, d'une onde lumineuse de référence émise par la source de lumière, dans une bande spectrale de référence, aux différents instants de mesure.

Selon un mode de réalisation,

- la durée initiale est comprise entre 2 et 20 ms, et de préférence entre 5 ms et 15 ms ;
- et/ou la durée nominale est comprise entre 20 ms et 150 ms et de préférence entre 50 ms et 100 ms.

Selon un mode de réalisation, le générateur d'impulsions est configuré de telle sorte que chaque impulsion comporte une période finale, au cours de laquelle le signal d'activation décroît, en dessous du niveau nominal, durant une durée finale, jusqu'à l'instant final. La durée finale peut être comprise entre 10 ms et 100 ms, et de préférence entre 20 ms et 50 ms.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A représente un exemple de dispositif permettant la mise en oeuvre de l'invention.

La figure 1B schématise un spectre d'émission d'une source de lumière de type corps noir.

La figure 2A représente des impulsions électriques formant un signal d'activation selon l'art antérieur.

La figure 2B montre la forme d'impulsions lumineuses émises par une source de lumière alimentée par des impulsions électriques selon l'art antérieur, dans une plage temporelle représentée par une accolade sur la figure 2A.

La figure 2C montre la forme d'impulsions lumineuses détectées par un photodétecteur exposé à une source de lumière alimentée par un signal d'activation selon l'art antérieur.

La figure 2D montre la forme d'impulsions lumineuses détectées par un photodétecteur exposé à une source de lumière alimentée par un signal d'activation selon un mode de réalisation de l'invention.

La figure 3A schématise une impulsion électrique formant le signal d'activation, selon un premier mode de réalisation.

La figure 3B illustre une impulsion lumineuse générée par une source de lumière soumise à une impulsion électrique telle que représentée sur la figure 3A.

La figure 3C est un zoom de la figure 3B.

La figure 4 schématise une impulsion électrique formant le signal d'activation, selon un deuxième mode de réalisation.

La figure 5A est un enregistrement montrant une onde lumineuse émise par une source de lumière activée par un signal d'activation respectivement selon l'art antérieur et selon le deuxième mode de réalisation.

La figure 5B est un enregistrement montrant une onde lumineuse émise par une source de lumière activée par un signal d'activation respectivement selon l'art antérieur et selon le deuxième mode de réalisation.

La figure 6A montre un signal issu du photodétecteur d'un capteur de gaz.

La figure 6B est une analyse fréquentielle de la figure 6A.

## EXPOSE DE MODES DE REALISATION PARTICULIERS

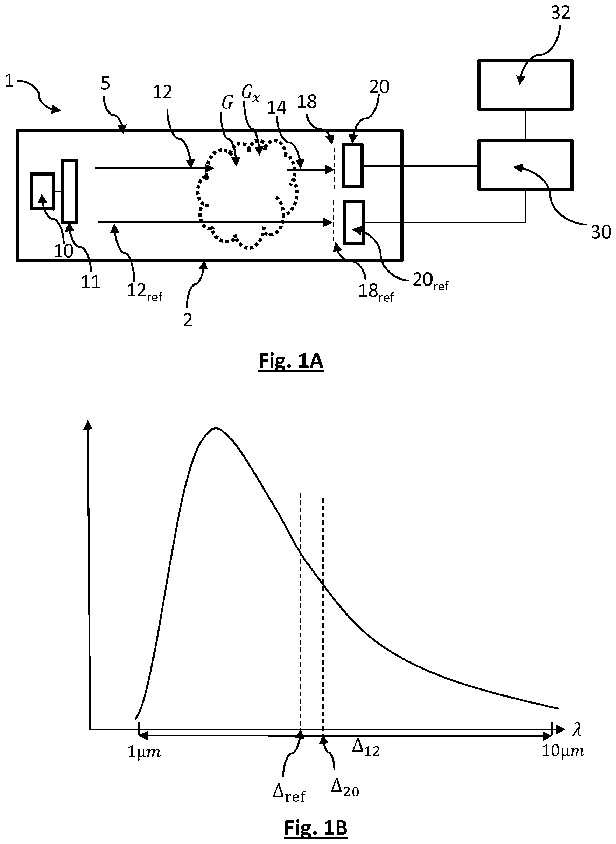

La figure 1A est un exemple d'un dispositif d'analyse 1 de gaz. Ce dispositif comporte une enceinte 5 définissant un espace interne à l'intérieur duquel se trouvent :

- une source de lumière 11, apte à émettre une onde lumineuse 12, dite onde lumineuse incidente, de façon à illuminer un gaz G s'étendant dans l'espace interne. L'onde lumineuse incidente 12 s'étend selon une bande spectrale d'illumination $\Delta_{12}$.

- un photodétecteur 20, dit photodétecteur de mesure, configuré pour détecter une onde lumineuse 14 transmise par le gaz G, sous l'effet de l'illumination de ce dernier par l'onde lumineuse incidente 12. L'onde lumineuse 14 est désignée par le terme onde lumineuse de mesure. Elle est détectée, par le photodétecteur de mesure 20, dans une bande spectrale de mesure $\Delta_{20}$.

- un photodétecteur de référence $20_{ref}$, configuré pour détecter une onde lumineuse $12_{ref}$, dite de référence dans une bande spectrale de référence $\Delta_{ref}$. La bande spectrale de référence $\Delta_{ref}$ est une bande spectrale dans laquelle on considère que l'absorption de l'onde lumineuse 12 par le gaz G est négligeable. La bande spectrale de référence $\Delta_{ref}$ est différente de la bande spectrale de mesure $\Delta_{20}$. Le photodétecteur de référence est optionnel.

Le gaz G comporte une espèce gazeuse $G_x$ dont on cherche à déterminer une quantité $c_x(k)$, par exemple une concentration, à un instant de mesure k. Cette espèce gazeuse absorbe une part mesurable de la lumière dans une bande spectrale d'absorption $\Delta_x$.

La source de lumière 11 est apte à émettre l'onde lumineuse incidente 12, selon la bande spectrale d'illumination $\Delta_{12}$, cette dernière pouvant s'étendre entre le proche ultraviolet et l'infrarouge moyen, par exemple entre 200 nm et 10 $\mu$m, et le plus souvent entre 1 $\mu$m et 10 $\mu$m. La bande spectrale d'absorption $\Delta_x$ de l'espèce gazeuse $G_x$ analysée est comprise dans la bande spectrale d'illumination $\Delta_{12}$. La source de lumière 11 est une source impulsionnelle, l'onde lumineuse incidente 12 étant une impulsion de durée généralement comprise entre 100 ms et 1 s. La source de lumière 11 peut notamment être une source de lumière de type filament suspendu et chauffé à une température comprise entre 400°C et 800°C. Son spectre d'émission, dans la bande spectrale d'émission $\Delta_{12}$, correspond au spectre d'émission d'un corps noir.

Le photodétecteur de mesure 20 est de préférence associé à un filtre optique 18, définissant la bande spectrale de mesure $\Delta_{20}$ englobant tout ou partie de la bande spectrale d'absorption $\Delta_x$ de l'espèce gazeuse.

Dans l'exemple considéré, le photodétecteur de mesure 20 est une thermopile, apte à délivrer un signal dépendant de l'intensité de l'onde lumineuse détectée. De façon alternative, le photodétecteur de mesure peut être une photodiode ou un autre type de photodétecteur.

Le photodétecteur de référence $20_{ref}$ est disposé à côté du photodétecteur de mesure 20 et est de même type que ce dernier. Il est associé à un filtre optique, dit filtre optique de référence $18_{ref}$. Le filtre optique de référence $18_{ref}$ définit la bande spectrale de référence $\Delta_{ref}$ correspondant à une plage de longueurs d'onde non absorbées par l'espèce gazeuse considérée. La bande pas-

sante de référence $\Delta_{ref}$ est par exemple centrée autour de la longueur d'onde 3.91 μm.

L'intensité $I_{20}(k)$ de l'onde lumineuse 14 détectée par le photodétecteur de mesure 20, dite intensité de mesure, à un instant de mesure k, dépend de la quantité $c_x(k)$ à l'instant de mesure, selon la relation de Beer Lambert :

$$abs(k) = 1 - \frac{I_{20}(k)}{I_0(k)} = 1 - e^{-\mu(c_x(k))l} \quad (1)$$

où :

- $\mu(c_x(k))$ est un coefficient d'absorption, dépendant de la quantité $c_x(k)$ à l'instant $k$;
- 1 est l'épaisseur de gaz traversé par l'onde lumineuse dans l'enceinte 5;
- $I_0(k)$ est l'intensité de l'onde lumineuse incidente, à l'instant k, qui correspond à l'intensité de l'onde lumineuse, dans la bande spectrale de mesure $\Delta_{20}$, atteignant le photodétecteur de mesure 20 en l'absence de gaz absorbant dans l'enceinte 5.

La comparaison entre $I_{20}(k)$ et $I_0(k)$, prenant la forme d'un ratio $\frac{I_{20}(k)}{I_0(k)}$, permet de définir l'absorption $abs(k)$ générée par l'espèce gazeuse considérée à l'instant $k$.

Le dispositif comporte une unité de traitement 30, par exemple un microprocesseur, relié à une mémoire 32. L'unité de traitement reçoit les signaux respectivement détectés par le photodétecteur de mesure 20 et le photodétecteur de référence $20_{ref}$ pour déterminer la quantité d'analyte $c_x(k)$ à chaque instant de mesure k.

Lors de chaque impulsion de la source de lumière 11, on peut ainsi déterminer $\mu(c_x(k))$ ce qui permet d'estimer $c_x(k)$ sachant que la relation entre $c_x(k)$ et $\mu(c_x(k))$ est connue.

L'expression (1) suppose une maîtrise de l'intensité $I_0(k)$ de l'onde lumineuse incidente 12 à l'instant de mesure k. Cette intensité est déterminée à partir de l'intensité lumineuse détectée par le photodétecteur de référence.

Comme précédemment indiqué, la source de lumière est impulsionnelle. L'instant de mesure k est un instant correspondant à une impulsion lumineuse. Ainsi, à différentes impulsions lumineuses correspondent respectivement différents instants de mesure.

La figure 1B schématise un spectre d'émission d'une source de lumière de type corps noir, obéissant à la loi de Planck :

$$L(\lambda, Temp) = \frac{2hc^2}{\lambda^5} \frac{1}{e^{\frac{hc}{\lambda B\, Temp}} - 1} \quad (2)$$

où

- $L(\lambda, Temp)$ est la luminance, dépendant de la longueur d'onde $\lambda$ et de la température de surface $Temp$ du corps noir,
- $h$ est la constante de Planck,
- $B$ est la constante de Boltzmann,
- $c$ est la vitesse de la lumière dans l'air.

Le spectre d'illumination S de la source de lumière 11 correspond à l'évolution de la luminance $L(\lambda, Temp)$ en fonction de $\lambda$, lorsque la source de lumière est portée à une température $Temp$. Généralement, la température est comprise entre 400°C et 800 °C.

La source de lumière 11 est commandée par un générateur d'impulsions électriques 10, qui délivre un signal d'activation de la source de lumière. Le signal d'activation V est un signal électrique alimentant la source de lumière 11. Il est formé d'impulsions électriques $imp_V$, chaque impulsion électrique engendrant une émission d'une impulsion lumineuse $imp_I$ par la source de lumière. Le niveau du signal d'activation commande l'amplitude de chaque impulsion lumineuse délivrée par la source de lumière. Par niveau, on entend un niveau d'intensité ou un niveau de tension du signal d'activation. Dans la suite du texte, on considère que le signal d'activation commande une tension aux bornes de la source de lumière. Alternativement, il pourrait s'agir d'une intensité du signal d'activation alimentant la source de lumière.

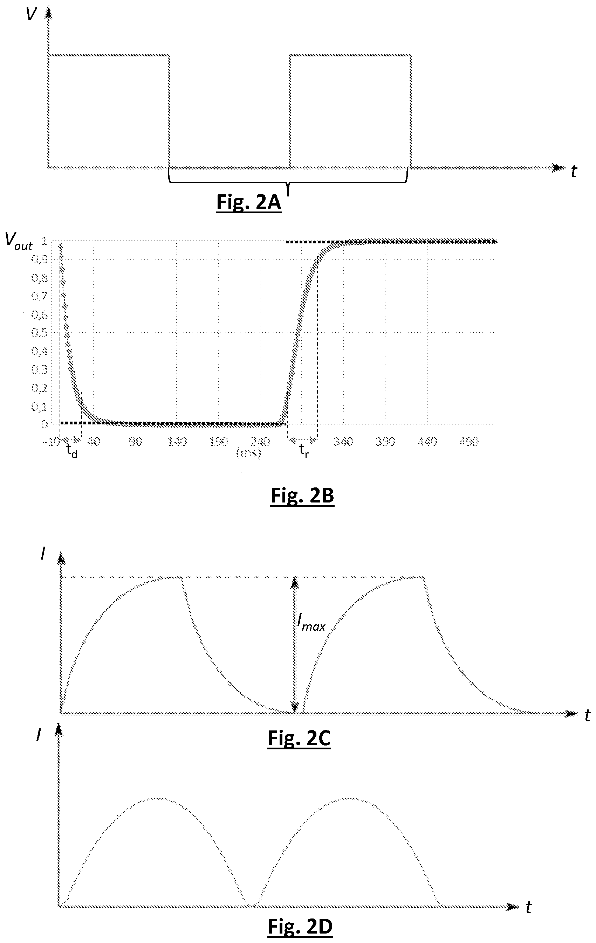

La figure 2A représente une évolution temporelle V(t) d'un signal d'activation V selon l'art antérieur. Le signal d'activation comporte des impulsions électriques $imp_V$ s'étendant selon une durée $\Delta t$ constante. Le signal d'activation V prend la forme d'une fonction temporelle discontinue, formée de créneaux réguliers. On remarque que chaque créneau est obtenu en portant le signal d'activation à un niveau nominal $V_N$, sensiblement constant, durant la durée de l'impulsion électrique. Par sensiblement constant, on entend prenant une même valeur aux fluctuations statistiques près, et par exemple à ± 5% ou ± 10% près.

Les inventeurs ont alimenté une source de lumière 11, telle que précédemment décrite, avec un signal d'activation V formé de créneaux réguliers, tels que représentés sur la figure 2A. Ils ont exposé une photodiode à la lumière générée par la source de lumière. La figure 2B montre l'évolution temporelle du signal $V_{out}(t)$ délivré par la photodiode, normalisée par rapport à sa valeur maximale. Sur la figure 2B, on a représenté le signal délivré par la photodiode durant un intervalle temporel matérialisé par une accolade sur la figure 2A. Il est à noter que pour réaliser cet essai, les inventeurs ont utilisé une photodiode en raison du faible temps de réponse de ce type de photodétecteur par rapport à celui de la source de lumière. Aussi, le signal $V_{out}$ peut être considéré comme représentatif de l'intensité I de l'onde lumineuse 12 produite par la source de lumière.

La durée $\Delta t$ des impulsions électriques du signal V d'activation de la source de lumière 11 était de 260 ms. Le niveau nominal $V_N$ était de 1100 mV. On a schématisé, par des pointillés noirs, l'évolution temporelle V du signal d'activation normalisé par sa valeur maximale.

On observe que l'intensité I de l'onde lumineuse émise par la source de lumière prend la forme d'une impulsion lumineuse imp, ce qui était attendu. Cependant, on observe également que l'impulsion lumineuse imp, subit une latence par rapport à l'impulsion électrique $imp_v$ Cela se traduit par un décalage temporel entre l'impulsion électrique du signal d'activation, et l'impulsion lumineuse de la source de lumière 11. Le décalage temporel se manifeste :

- au début de chaque impulsion électrique $imp_v$ par un temps de montée $t_r$ de l'impulsion lumineuse $imp_l$ induisant un retard, lors de la montée, de l'impulsion lumineuse par rapport à l'impulsion électrique $imp_v$. Le temps de montée est, dans cet exemple, supérieur à 40 ms. Le temps de montée est usuellement désigné par le terme anglais "rise time".
- à la fin de chaque impulsion électrique, par un temps de descente $t_d$ de l'impulsion lumineuse $imp_l$ induisant un retard, lors de la descente, de l'impulsion lumineuse par rapport à l'impulsion électrique. Le temps de descente est dans cet exemple de l'ordre de 40 ms.

Du fait de l'existence du temps de montée et du temps de descente, chaque impulsion lumineuse imp, prend une forme telle que celles schématisées sur la figure 2C. Il apparaît que le niveau maximal $I_{max}$ de chaque impulsion lumineuse est retardé par rapport au début de l'impulsion électrique, du fait de l'existence du temps de montée $t_r$. Par ailleurs, du fait de l'existence du temps de descente $t_d$, chaque impulsion lumineuse décroît selon une forme temporelle suivant une équation de type $e^{-t/\tau}$, où $\tau$ est une constante de temps dépendant du temps de descente $t_d$.

Comme on peut le constater sur la figure 2C, chaque impulsion lumineuse ne se traduit pas, au niveau du signal mesuré par le photodétecteur, par une forme sinusoïdale, qu'il s'agisse du photodétecteur de mesure 20 ou du photodétecteur de référence $20_{ref}$. De ce fait, lorsque le signal mesuré par le photodétecteur de mesure 20 (ou du photodétecteur de référence $20_{ref}$) subit une analyse fréquentielle, il est nécessaire de disposer un filtre, par exemple un filtre analogique, entre le photodétecteur et l'unité de traitement 30. Le filtre permet une mise en forme du signal mesuré, de façon à le rendre sinusoïdal, comme représenté sur la figure 2D.

L'objectif de l'invention est de modifier la forme de chaque impulsion électrique du signal d'activation, afin d'ajuster la forme de chaque impulsion lumineuse émise par la source de lumière en évitant l'usage d'un filtre analogique.

Selon un premier mode de réalisation, on cherche à réduire le temps de montée $t_r$ de chaque impulsion lumineuse, de façon à pouvoir réduire la durée de chaque impulsion lumineuse. Selon un deuxième mode de réalisation, on cherche à adapter la forme de l'onde lumineuse lors de sa décroissance, de façon à faciliter le traitement du signal résultant du photodétecteur de mesure 20, et de l'éventuel photodétecteur de référence $20_{ref}$.

Comme précédemment évoqué, chaque instant de mesure k est de préférence choisi de façon à correspondre à une intensité maximale $I_{max}$ de chaque impulsion lumineuse. Plus le temps de montée $t_r$ augmente, plus l'instant de mesure doit être décalé par rapport au début d'une impulsion électrique du signal d'activation V. Le décalage permet que l'instant de mesure corresponde à un instant auquel l'impulsion lumineuse est à son maximum.

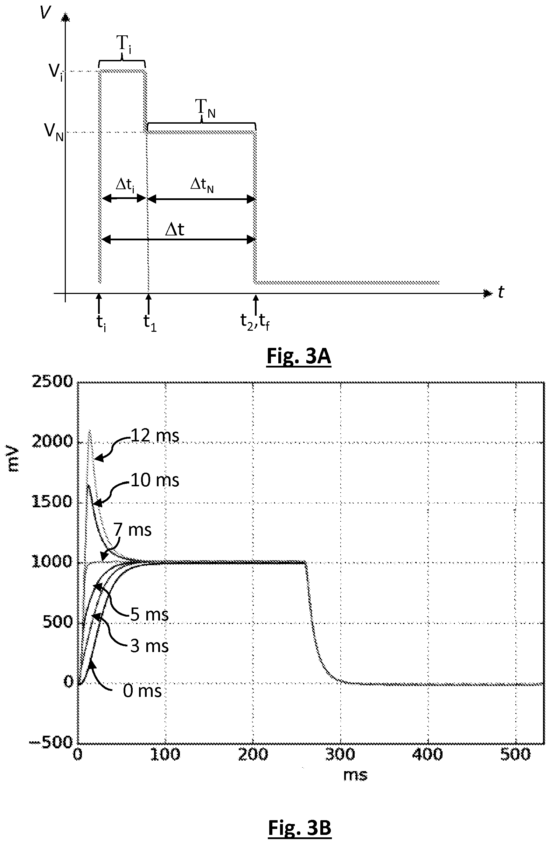

Afin de réduire le temps de montée $t_r$ de l'impulsion lumineuse, les inventeurs proposent de moduler l'amplitude de chaque impulsion électrique formant le signal d'activation V commandant la source de lumière 11. Cela constitue le premier mode de réalisation de l'invention, décrit en lien avec les figures 3A à 3C.

La figure 3A représente un exemple d'impulsion électrique dont la forme permet une réduction du temps de montée $t_r$ de l'impulsion lumineuse. L'impulsion électrique s'étend entre un instant initial $t_i$ et un instant final $t_f$. Entre l'instant initial $t_i$ et un premier instant $t_j$, le signal d'activation V est porté à un niveau initial $V_i$, et cela durant une période initiale $T_i$ s'étendant selon une durée initiale $\Delta t_i$. De préférence, durant la période initiale $T_i$, le signal d'activation est maintenu au niveau initial $V_i$, ou sensiblement autour de ce niveau. On rappelle que le terme sensiblement signifie aux fluctuations statistiques près, et de préférence selon une variation inférieure à $\pm 5\%$ ou $\pm 10\%$.

A l'issue de la période initiale $T_i$, le signal d'activation est porté à un niveau nominal $V_N$, durant une période nominale $T_N$ s'étendant selon une durée nominale $\Delta t_N$. Le niveau nominal correspond à un niveau usuel d'alimentation de la source de lumière. La période nominale $T_N$ s'étend entre le premier instant $t_1$ et un deuxième instant $t_2$. Dans le mode de réalisation représenté sur la figure 3A, le deuxième instant $t_2$ est confondu avec l'instant final $t_f$. Le niveau nominal $V_N$ est inférieur au niveau initial $V_i$. Le niveau initial $V_i$ est de préférence supérieur d'au moins 10%, voire au moins 15% ou 20%, au niveau nominal $V_N$. De préférence, la durée nominale $\Delta t_N$ est supérieure à la durée initiale $\Delta t_i$. Par exemple, la durée nominale $\Delta t_N$ est au moins 1.5 fois supérieure à la durée initiale $\Delta t_i$. A l'issue de la période nominale $T_N$, le signal d'activation est ramené à une valeur nulle ou à une valeur minimale. Selon cet exemple, la fin de la durée nominale $\Delta t_N$ coïncide avec l'instant final $t_f$, mais cela n'est pas impératif. Aussi, selon une variante, le signal d'activation décroît après le deuxième instant $t_2$, jusqu'à l'instant final $t_f$. La décroissance correspond à une période finale $T_f$, s'étendant entre le deuxième instant $t_2$ et l'instant final $t_f$.

D'une façon générale, la durée initiale $\Delta t_i$ est

inférieure à la durée nominale $\Delta t_N$.

La durée initiale $\Delta t_i$ est de préférence comprise entre 2 ms et 20 ms, et de préférence entre 5 ms et 15 ms. La durée nominale $\Delta t_N$ est de préférence comprise entre 20 ms et 150 ms, et de préférence entre 50 ms et 100 ms.

Selon l'exemple représenté sur la figure 3A, la durée $\Delta t$ de chaque impulsion électrique correspond à la somme de la durée initiale $\Delta t_i$ et de la durée nominale $\Delta t_N$.

Sur la figure 3B, on a représenté des évolutions temporelles de signaux $V_{out}$ mesurés par une photodiode exposée à une source de lumière 11 de type filament. La source de lumière 11 est activée par un courant d'activation V impulsionnel, formé d'impulsions électriques telles que celle schématisée sur la figure 3A. Le niveau initial $V_i$ et le niveau nominal $V_N$ sont respectivement égaux à 2000 mV et 1100 mV dans l'exemple représenté. L'instant initial est $t_i = 0$ ms. La durée totale $\Delta t$ de chaque impulsion électrique est égale à 260 ms. Différentes durées initiales $\Delta t_i$ ont été testées : 0 ms (ce qui correspond à l'art antérieur) ; 3 ms ; 5 ms ; 7 ms ; 10 ms ; 12 ms. Chaque durée initiale $\Delta t_i$ a été reportée sur la figure 3B. La durée nominale $\Delta t_N$ de la période nominale $T_N$ a été ajustée de telle sorte que la durée totale de chaque impulsion lumineuse soit égale à 260 ms.

On rappelle que du fait du temps de réponse négligeable d'une photodiode, les impulsions représentées sur la figure 3B sont représentatives des impulsions lumineuses émises par la source de lumière en réponse à chaque impulsion électrique du signal d'activation.

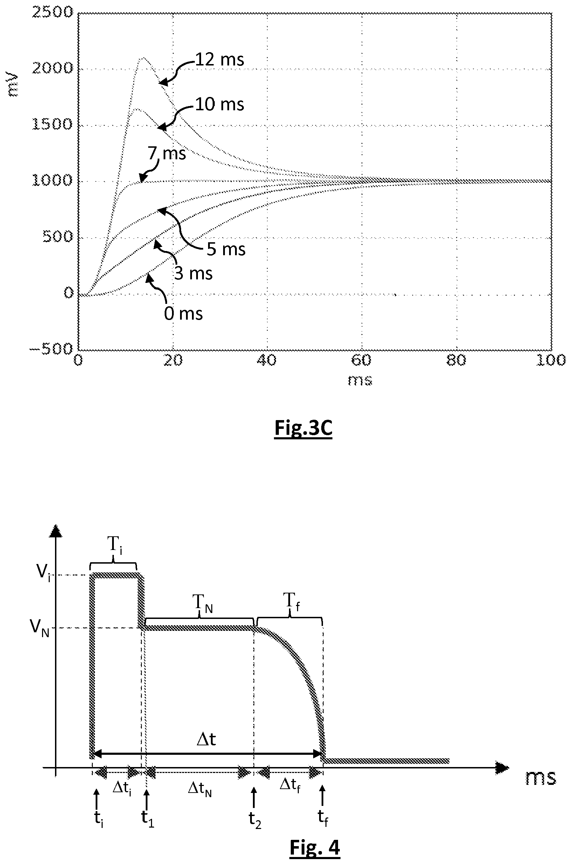

La valeur de 1000 mV correspond à l'intensité maximale $I_{max}$ de l'onde lumineuse émise selon la configuration de l'art antérieur. La figure 3C correspond à un détail de la figure 3B sur les 100 premières millisecondes à partir de l'instant initial $t_i$. On remarque que lorsque la durée initiale $\Delta t_i$ est faible (0 ms ; 3 ms ; 5 ms), l'impulsion lumineuse subit un certain retard par rapport à l'instant initial $t_i$. Le retard peut être de 80 ms ($\Delta t_i = 0$ ms), ou proche de 60 ms ($\Delta t_i = 3$ ms, $\Delta t_i = 5$ ms). Le retard correspond au temps de montée $t_r$, c'est-à-dire au retard, par rapport à l'instant initial $t_i$, avec lequel l'onde lumineuse atteint le niveau maximal $I_{max}$. Lorsque la durée initiale $\Delta t_i$ atteint 10 ms ou 12 ms, le temps de montée $t_r$ de l'impulsion lumineuse est faible. Cependant, durant les 40 premières millisecondes, l'impulsion lumineuse forme un pic d'intensité, usuellement désigné par le terme anglosaxon "overshoot", au-dessus d'une intensité nominale de la source de lumière. Ce pic d'intensité est indésirable, car il peut induire un vieillissement prématuré de la source de lumière. Compte tenu du niveau initial et du niveau nominal sélectionnés ($V_i = 1100$ mV - $V_N = 2000$ mV), la durée initiale $\Delta t_i$ de 7 ms est optimale : le temps de montée $t_r$ est inférieur à 20 ms, et l'évolution de l'intensité lumineuse, durant le temps de montée, est monotone : elle croît progressivement vers le niveau maximal $I_{max}$. La valeur du niveau nominal $V_N$ est à choisir en fonction de la valeur du niveau initial $V_i$ : plus l'écart entre $V_N$ et $V_i$ est élevé, plus la durée initiale $\Delta t_i$ peut être

réduite.

L'homme du métier pourra tester différentes valeurs de $V_i$, $\Delta t_i$ , voire $V_N$, de façon à obtenir, au niveau du photodétecteur, une forme d'impulsion considérée comme optimale. Il pourra tenir compte du fait que des valeurs trop élevées de $V_i$ peuvent augmenter significativement la consommation électrique. En considérant une telle durée initiale $\Delta t_i$, le niveau maximal $I_{max}$ est plus rapidement atteint que selon l'art antérieur. Cela permet de réduire la durée de chaque impulsion lumineuse, car chaque instant de mesure k peut être rapproché de l'instant initial de chaque impulsion. En effet, l'instant de mesure est un instant auquel l'impulsion lumineuse a atteint l'intensité maximale $I_{max}$. En réduisant le temps de montée $t_r$ de l'impulsion lumineuse, l'intensité maximale $I_{max}$ est plus rapidement atteinte. L'instant final $t_f$ de l'impulsion peut être choisi quelques ms ou dizaines de ms après l'atteinte de l'intensité maximale $I_{max}$. Il en résulte une réduction de la durée totale de l'impulsion lumineuse. Or, en réduisant la durée de l'impulsion lumineuse, on retarde le vieillissement de la source de lumière 11. Dans l'exemple représenté sur la figure 3B, les inventeurs estiment que la durée de l'impulsion lumineuse peut être réduite à 150 ms.

Selon un autre mode de réalisation, pouvant être mis en oeuvre simultanément au premier mode de réalisation ou indépendamment de ce dernier, on cherche principalement à optimiser la forme de l'impulsion lumineuse durant sa décroissance. Selon ce deuxième mode de réalisation, on peut également chercher à réduire le temps de montée $t_r$. Selon ce mode de réalisation, comme représenté sur la figure 4, à l'issue de la période nominale $T_N$, c'est-à-dire après le deuxième instant $t_2$, l'impulsion électrique $imp_v$ décroît progressivement jusqu'à l'instant final $t_f$. La période délimitée par le deuxième instant $t_2$ et l'instant final $t_f$ est une période finale $T_f$. Sur l'exemple représenté sur la figure 4, l'impulsion électrique comporte une période initiale $\Delta t_i$ telle que décrite en lien avec le premier mode de réalisation. La période nominale $T_N$ s'achève à un deuxième instant $t_2$. A la suite de la période nominale $T_N$ s'étend la période finale $T_f$, au cours de laquelle le signal d'activation décroît progressivement.

De préférence, la durée $\Delta t_f$ de la période finale $T_f$ est inférieure à la durée $\Delta t_N$ de la période nominale $T_N$, en étant par exemple au moins 1.5 fois inférieure ou au moins 2 fois inférieure à la durée $\Delta t_N$ de la période nominale $T_N$. De préférence, la durée de la période finale $\Delta t_f$ est supérieure à la durée de la période initiale $\Delta t_i$. La durée $\Delta t_f$ de la période finale $T_f$ peut être comprise entre 10 ms et 100 ms, et de préférence entre 20 ms et 50 ms. Durant la période finale $T_f$, le signal d'activation est inférieur au niveau nominal $V_N$, et a fortiori inférieur au niveau initial $V_i$.

Selon l'exemple représenté sur la figure 4, la durée $\Delta t$ de chaque impulsion électrique correspond à la somme de la durée initiale $\Delta t_i$, de la durée nominale $\Delta t_N$ et de la durée finale $\Delta t_f$.

De préférence, au cours de la période finale $T_f$, la décroissance du signal d'activation suit une fonction décroissante monotone, par exemple, et avantageusement, une fonction sinusoïdale.

Selon ce mode de réalisation, l'impulsion lumineuse $imp_l$ décroît de façon sensiblement sinusoïdale, comme représenté sur la figure 2D.

L'impulsion électrique $imp_v$ représentée sur la figure 4 comporte une période initiale $T_i$, telle que décrite en lien avec les figures 3A à 3C.

Selon une variante, l'impulsion ne comporte pas de période initiale $T_i$. L'instant initial $t_i$ est alors confondu avec le premier instant $t_1$ de la période nominale $T_N$.

Quel que soit le mode de réalisation, chaque impulsion électrique du signal d'activation V peut comporter les paramètres suivants :

- durée $\Delta t_i$ de la période initiale $T_i$;
- niveau $V_i$ du signal d'activation durant la période initiale $T_i$;
- durée $\Delta t_N$ de la période nominale $T_N$;
- niveau $V_N$ du signal d'activation durant la période nominale $T_N$;
- durée $\Delta t_f$ de la période finale $T_f$;
- fonction suivie par le signal d'activation durant la période finale $T_f$.

Ces paramètres peuvent être déterminés au cas par cas, en fonction de l'effet technique recherché : diminution du temps de montée $t_r$ de l'impulsion lumineuse et/ou optimisation de la décroissance de l'onde lumineuse. La détermination des paramètres peut par exemple être effectuée en actionnant la source de lumière et en observant l'évolution du signal détecté par un photodétecteur. Ce dernier peut être le photodétecteur de mesure 20 utilisé par le capteur, ou un photodétecteur spécifique, par exemple une photodiode, utilisé à des fins d'ajustement des paramètres de mise en forme des impulsions électriques formant le signal d'activation. La consommation électrique de la source de lumière peut également être prise en compte.

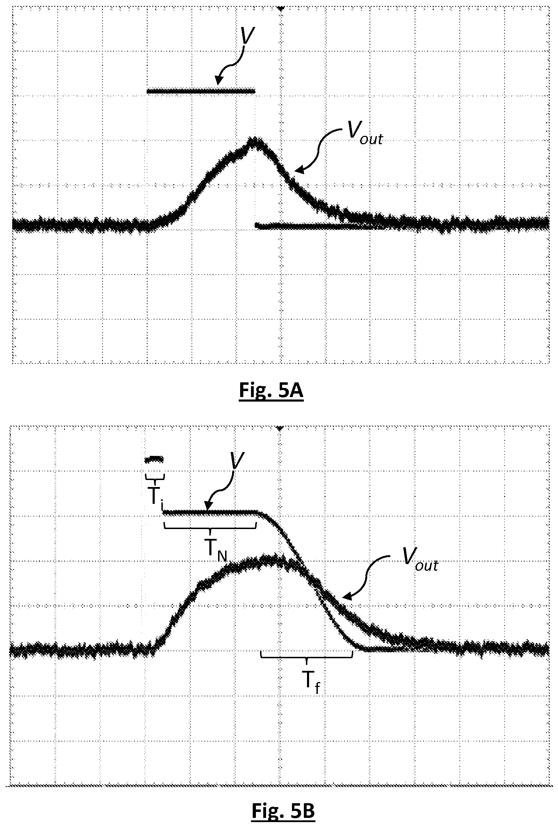

Les figures 5A et 5B sont des captures d'écrans d'oscilloscope. Sur chacune de ces figures, on a représenté une impulsion électrique $imp_v$ formant le signal d'activation V d'une source de lumière de type filament. On a également représenté l'évolution temporelle d'un signal $V_{out}$ généré par un photodétecteur, exposé à l'onde lumineuse produite par la source de lumière. Le photodétecteur est représentatif du photodétecteur de mesure 20 ou du photodétecteur de référence $20_{ref}$.

La figure 5A montre une configuration selon l'art antérieur, le signal d'activation V formant une impulsion électrique $imp_v$ en forme de créneau. La figure 5B montre une configuration selon l'invention, le signal d'activation V étant tel que décrit en lien avec la figure 4. On observe le niveau initial $V_i$ durant la période initiale $T_i$, le niveau nominal $V_N$ durant la période nominale $T_N$, ainsi que la décroissance du signal d'activation, selon une forme sinusoïdale, durant la période finale $T_f$. Sur la figure 5B, le paramétrage de l'impulsion du signal d'activation permet d'obtenir un signal émis par le photodétecteur dont la forme est proche d'une sinusoïde. Comme précédemment indiqué, une telle forme est adaptée lorsqu'on effectue une analyse spectrale du signal résultant du photodétecteur de mesure 20.

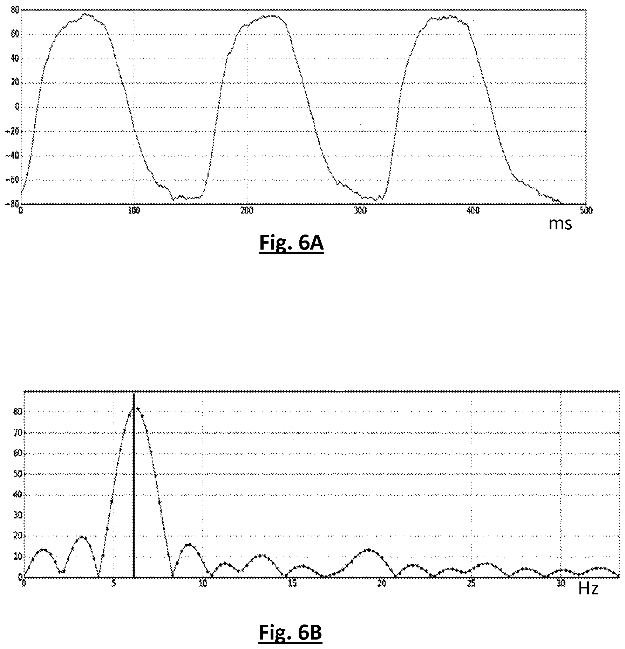

La figure 6A montre le signal issu d'un photodétecteur de mesure 20, de type thermopile, d'un capteur de gaz tel que représenté sur la figure 1A. Le photodétecteur de mesure 20 a été exposé à une onde lumineuse générée par une source de lumière 11. La source de lumière 11 a été activée par un signal d'activation tel que décrit sur la figure 4. Les paramètres de l'impulsion sont, dans cet exemple, sont les suivants :

- durée $\Delta t_i$ de la période initiale $T_i$ = 8 ms ;
- niveau $V_i$ du signal d'activation durant la période initiale $T_i$ = 1.3 V ;
- durée $\Delta t_N$ de la période nominale $T_N$ = 1.9 V ;
- niveau $V_N$ du signal d'activation durant la période nominale $T_N$ = 45 ms ;
- durée $\Delta t_f$ de la période finale $T_f$ = 35 ms.
- fonction suivie au cours de la période finale $T_f$: fonction sinusoïdale

Le signal issu du photodétecteur de mesure 20 montre trois impulsions, correspondant à trois impulsions lumineuses générées par la source de lumière.

Le signal résultant du photodétecteur a fait l'objet d'une analyse fréquentielle, après application d'une transformée de Fourier rapide, de façon à obtenir une puissance spectrale correspondant à différentes fréquences. La figure 6B représente montre la puissance spectrale (axe des ordonnées) en fonction de la fréquence (axe des abscisses). On observe un pic à une fréquence voisine de 7 Hz.

Ce mode de réalisation permet de limiter le vieillissement de la source, car il permet de réduire la durée $\Delta t_N$ de la période nominale $T_N$. Les inventeurs estiment que ce mode de réalisation permet de réduire la durée de la période nominale de 260 ms à 45 ms.

Des essais ont été menés durant une semaine, en utilisant un capteur mettant en oeuvre l'invention (deuxième mode de réalisation) et un capteur de l'art antérieur, dans lequel la source de lumière est alimentée selon des créneaux réguliers, tels que représentés sur la figure 2A. Sur chaque capteur, la cadence des impulsions lumineuses était de 1 impulsion par seconde. Sur chaque capteur, on a déterminé le vieillissement de la source de lumière. Ce dernier est déterminé en évaluant la décroissance l'intensité maximale de chaque impulsion. On a observé une réduction du vieillissement de la source de 3.3 % avec le dispositif de l'art antérieur, contre 0.1% en mettant en oeuvre l'invention.

Ainsi, le paramétrage du signal d'activation V selon l'invention peut :

- privilégier un temps de montée rapide de l'onde lumineuse, comme exposé en lien avec les figures 3A à 3C, de façon à pouvoir réduire la durée de chaque impulsion lumineuse : cela permet de ralentir le vieillissement de la source;
- et/ou privilégier une forme sinusoïdale de l'onde lumineuse, comme exposé en lien avec les figures 4, 5A et 5B, de façon que le signal résultant du photodétecteur de mesure, et de l'éventuel photodétecteur de référence, puisse faire l'objet d'une analyse spectrale, sans nécessiter le recours à un filtre de mise en forme du signal. Notons que cela peut également supposer une réduction du temps de montée de l'impulsion lumineuse, ce qui contribue également à ralentir le vieillissement de la source.

**[0072]** L'invention pourra être mise en oeuvre pour le pilotage de sources de lumière équipant des capteurs de gaz, pour des usages de type contrôle de pollution atmosphérique, agroalimentaire, contrôle de procédés industriels, contrôle de gaz de combustion...

**Revendications**

1. Procédé de mesure d'une quantité ($c_x$) d'une espèce gazeuse ($G_x$) présente dans un gaz, l'espèce gazeuse étant apte à absorber une lumière dans une bande spectrale d'absorption ($\Delta_x$) le procédé comportant les étapes suivantes :

    a) disposition du gaz entre une source de lumière (11) et un photodétecteur de mesure (20), la source de lumière (11) étant apte à émettre une onde lumineuse (12), se propageant à travers le gaz vers le photodétecteur de mesure (20), la source de lumière étant de type corps noir ou corps gris ;
    b) activation de la source de lumière (11) pour illuminer le gaz, de façon que la source de lumière émette une impulsion lumineuse ;
    c) mesure, par le photodétecteur de mesure (20), d'une intensité (1(k)), dite intensité de mesure, d'une onde lumineuse (14) transmise par le gaz au cours de son illumination, dans une bande spectrale de mesure ($\Delta_{20}$), comportant la bande spectrale d'absorption ($\Delta_x$);

    le procédé étant **caractérisé en ce que** l'étape b) comprend une alimentation de la source de lumière par un signal d'activation impulsionnel (V), le signal d'activation comportant des impulsions électriques, chaque impulsion électrique s'étendant entre un instant initial ($t_i$) et un instant final ($t_f$), et chaque impulsion électrique comportant :

    - une période initiale ($T_i$), s'étendant selon une durée initiale ($\Delta t_i$) à partir de l'instant initial ($t_i$), au cours de laquelle le signal d'activation (V) est porté à un niveau initial ($V_i$);
    - une période nominale ($T_N$), postérieure à la période initiale ($T_i$), au cours de laquelle le signal d'activation est maintenu à un niveau nominal ($V_N$) strictement inférieur au niveau initial ($V_i$), la période nominale ayant une durée nominale ($\Delta t_N$) supérieure à la durée initiale ($\Delta t_i$).

2. Procédé selon la revendication 1, dans lequel la durée initiale ($\Delta t_i$) est comprise entre 2 et 20 ms, et de préférence entre 5 ms et 15 ms.

3. Procédé selon l'une quelconque des revendications précédentes, dans lequel la durée nominale ($\Delta t_N$) est comprise entre 20 ms et 150 ms et de préférence entre 50 ms et 100 ms.

4. Procédé selon l'une quelconque des revendications précédentes, dans lequel lors de la période initiale ($T_i$), le signal d'activation (V) est maintenu au niveau initial ($V_i$) durant la durée initiale ($\Delta t_i$).

5. Procédé selon l'une quelconque des revendications précédentes, dans lequel la période nominale ($T_N$) s'étend jusqu'à l'instant final ($t_f$).

6. Procédé selon l'une quelconque des revendications 1 à 4, dans lequel la période nominale ($T_N$) est suivie d'une période finale ($T_f$), au cours de laquelle le signal d'activation décroît, en dessous du niveau nominal ($V_N$), durant une durée finale ($\Delta t_f$), jusqu'à l'instant final ($t_f$).

7. Procédé selon la revendication 6, dans lequel la durée finale ($\Delta t_f$) est supérieure à la durée initiale ($\Delta t_i$) et/ou la durée finale ($\Delta t_f$) est inférieure à la durée nominale ($\Delta t_N$)..

8. Procédé selon l'une quelconque des revendications 6 ou 7, dans lequel au cours de la période finale ($T_f$), le signal d'activation décroît progressivement jusqu'à l'instant final ($t_f$).

9. Procédé selon l'une quelconque des revendications 6 à 8, dans lequel la durée finale ($\Delta t_f$) est comprise entre 10 ms et 100 ms, et de préférence entre 20 ms et 50 ms.

10. Capteur (1) pour déterminer une quantité ($c_x$) d'une espèce gazeuse ($G_x$) dans un gaz (G), le capteur comportant :

    - une source de lumière (11), configurée pour émettre une onde lumineuse (12) se propageant vers le gaz (G), l'onde lumineuse s'étendant dans une bande spectrale d'absorption ($\Delta_x$) de l'espèce gazeuse ($G_x$), la source de lumière

étant de type corps noir ou corps gris;
- un photodétecteur de mesure (20), apte à détecter une onde lumineuse transmise (14) par le gaz, à différents instants de mesure (k), dans une bande spectrale de mesure et à en mesurer une intensité (I(k)), dite intensité de mesure;
- un générateur d'impulsion (10), configuré pour adresser un signal d'activation à la source de lumière, le signal d'activation étant formé d'impulsions, chaque impulsion comportant :

• une période initiale ($T_i$), s'étendant selon une durée initiale à partir de l'instant initial, au cours de laquelle le signal d'activation est porté à un niveau initial ($V_i$);
• une période nominale ($T_N$), postérieure à la période initiale, au cours de laquelle le signal d'activation est maintenu à un niveau nominal ($V_N$) strictement inférieur au niveau initial, la période nominale ayant une durée nominale supérieure à la durée initiale.

11. Capteur selon la revendication 10, comportant également :

- un photodétecteur de référence ($20_{ref}$), configuré pour mesurer une intensité ($I_{ref}(k)$), dite intensité de référence, d'une onde lumineuse de référence ($12_{ref}$) émise par la source de lumière (11), dans une bande spectrale de référence, aux différents instants de mesure (k).

12. Capteur selon l'une quelconque des revendications 10 ou 11, dans lequel :

- la durée initiale ($\Delta t_i$) est comprise entre 2 et 20 ms, et de préférence entre 5 ms et 15 ms ;
- et/ou la durée nominale ($\Delta t_N$) est comprise entre 20 ms et 150 ms et de préférence entre 50 ms et 100 ms.

13. Capteur selon l'une quelconque des revendications 10 à 12, dans lequel le générateur d'impulsions est configuré de telle sorte que chaque impulsion comporte une période finale ($T_f$), au cours de laquelle le signal d'activation décroît, en dessous du niveau nominal ($V_N$), durant une durée finale ($\Delta t_f$), jusqu'à l'instant final ($t_f$).

14. Capteur selon la revendication 13, dans lequel la durée finale est comprise entre 10 ms et 100 ms, et de préférence entre 20 ms et 50 ms.

15. Capteur selon l'une quelconque des revendications 10 à 14, dans lequel la source de lumière comporte un filament chauffé.

**Patentansprüche**

1. Verfahren zum Messen einer Menge ($c_x$) einer gasförmigen Spezies ($G_x$), die in einem Gas vorhanden ist, wobei die gasförmige Spezies in der Lage ist, ein Licht in einem Absorptionsspektralband ($\Delta_x$) zu absorbieren, wobei das Verfahren die folgenden Schritte umfasst:

a) Anordnen des Gases zwischen einer Lichtquelle (11) und einem Messfotodetektor (20), wobei die Lichtquelle (11) in der Lage ist, eine Lichtwelle (12) auszusenden, die sich durch das Gas hindurch zu dem Messfotodetektor (20) hin ausbreitet, wobei die Lichtquelle vom Schwarzkörper- oder Graukörpertyp ist;
b) Aktivieren der Lichtquelle (11), um das Gas zu beleuchten, so dass die Lichtquelle einen Lichtimpuls aussendet;
c) Messen, durch den Messfotodetektor (20), einer Intensität (/(k)), Messintensität genannt, einer von dem Gas während seiner Beleuchtung durchgelassenen Lichtwelle (14) in einem Messspektralband ($\Delta_{20}$), welches das Absorptionsspektralband ($\Delta_x$) umfasst;
wobei das Verfahren **dadurch gekennzeichnet ist, dass** der Schritt b) ein Speisen der Lichtquelle durch ein impulsartiges Aktivierungssignal (V) beinhaltet, wobei das Aktivierungssignal elektrische Impulse umfasst, wobei sich jeder elektrische Impuls zwischen einem anfänglichen Zeitpunkt ($t_i$) und einem finalen Zeitpunkt (tf) erstreckt,
und wobei jeder elektrische Impuls umfasst:

- einen anfänglichen Zeitraum ($T_i$), der sich gemäß einer anfänglichen Dauer ($\Delta t_i$) vom anfänglichen Zeitpunkt ($t_i$) aus erstreckt, während dessen das Aktivierungssignal (V) auf einen anfänglichen Pegel ($V_i$) gebracht wird;
- einen nominalen Zeitraum ($T_N$), nach dem anfänglichen Zeitraum ($T_i$), während dessen das Aktivierungssignal auf einem nominalen Pegel ($V_N$) gehalten wird, der strikt kleiner als der anfängliche Pegel ($V_i$) ist, wobei der nominale Zeitraum eine nominale Dauer ($\Delta t_N$) hat, die größer als die anfängliche Dauer ($\Delta t_i$) ist.

2. Verfahren nach Anspruch 1, bei dem die anfängliche Dauer ($\Delta t_i$) zwischen 2 und 20 ms und bevorzugt zwischen 5 ms und 15 ms beträgt.

3. Verfahren einem nach einem der vorhergehenden Ansprüche, bei dem die nominale Dauer ($\Delta t_N$) zwischen 20 ms und 150 ms und bevorzugt zwischen 50 ms und 100 ms beträgt.

**4.** Verfahren nach einem der vorhergehenden Ansprüche, bei dem beim anfänglichen Zeitraum (Ti) das Aktivierungssignal (V) während der anfänglichen Dauer ($\Delta t_i$) auf dem anfänglichen Pegel ($V_i$) gehalten wird.

**5.** Verfahren nach einem der vorhergehenden Ansprüche, bei dem sich der nominale Zeitraum ($T_N$) bis zum finalen Zeitpunkt (tf) erstreckt.

**6.** Verfahren nach einem der Ansprüche 1 bis 4, bei dem auf den nominalen Zeitraum ($T_N$) ein finaler Zeitraum (Tf) folgt, während dessen das Aktivierungssignal während einer finalen Dauer ($\Delta tf$), bis zum finalen Zeitpunkt (tf), unter den nominalen Pegel ($V_N$) sinkt.

**7.** Verfahren nach Anspruch 6, bei dem die finale Dauer ($\Delta tf$) größer als die anfängliche Dauer ($\Delta t_i$) ist und/oder die finale Dauer ($\Delta tf$) kleiner als die nominale Dauer ($\Delta t_N$) ist.

**8.** Verfahren nach einem der Ansprüche 6 oder 7, bei dem während des finalen Zeitraums (Tf) das Aktivierungssignal bis zum finalen Zeitpunkt (tf) zunehmend sinkt.

**9.** Verfahren einem nach einem der Ansprüche 6 bis 8, bei dem die finale Dauer ($\Delta tf$) zwischen 10 ms und 100 ms und bevorzugt zwischen 20 ms und 50 ms beträgt.

**10.** Sensor (1) zum Bestimmen einer Menge ($c_x$) einer gasförmigen Spezies ($G_x$) in einem Gas (G), wobei der Sensor umfasst:

- eine Lichtquelle (11), die dazu ausgestaltet ist, eine Lichtwelle (12) auszusenden, die sich zu dem Gas (G) hin ausbreitet, wobei sich die Lichtwelle in einem Absorptionsspektralband ($\Delta_x$) der gasförmigen Spezies ($G_x$) erstreckt, wobei die Lichtquelle vom Schwarzkörper- oder Graukörpertyp ist;
- einen Messfotodetektor (20), der in der Lage ist, eine von dem Gas durchgelassene Lichtwelle (14) zu verschiedenen Messzeitpunkten (k) in einem Messspektralband zu detektieren und ihre Intensität (I(k)), Messintensität genannt, zu messen;
- einen Impulsgenerator (10), der dazu ausgestaltet ist, ein Aktivierungssignal an die Lichtquelle zu richten, wobei das Aktivierungssignal aus Impulsen gebildet wird, wobei jeder Impuls umfasst:

• einen anfänglichen Zeitraum ($T_i$), der sich gemäß einer anfänglichen Dauer vom anfänglichen Zeitpunkt aus erstreckt, während dessen das Aktivierungssignal auf einen anfänglichen Pegel ($V_i$) gebracht wird;
• einen nominalen Zeitraum ($T_N$), nach dem anfänglichen Zeitraum, während dessen das Aktivierungssignal auf einem nominalen Pegel ($V_N$) gehalten wird, der strikt kleiner als der anfängliche Pegel ist, wobei der nominale Zeitraum eine nominale Dauer hat, die größer als die anfängliche Dauer ist.

**11.** Sensor nach Anspruch 10, umfassend ferner:

- einen Referenzfotodetektor ($20_{ref}$), der dazu ausgestaltet ist, eine Intensität ($I_{ref}(k)$), Referenzintensität genannt, einer Referenzlichtwelle ($12_{ref}$), die von der Lichtquelle (11) ausgesendet wird, in einem Referenzspektralband zu verschiedenen Messzeitpunkten (k) zu messen.

**12.** Sensor nach einem der Ansprüche 10 oder 11, bei dem:

- die anfängliche Dauer ($\Delta t_i$) zwischen 2 und 20 ms und bevorzugt zwischen 5 ms und 15 ms beträgt;
- und/oder die nominale Dauer ($\Delta t_N$) zwischen 20 ms und 150 ms und bevorzugt zwischen 50 ms und 100 ms beträgt.

**13.** Sensor nach einem der Ansprüche 10 bis 12, bei dem der Impulsgenerator derart ausgestaltet ist, dass jeder Impuls einen finalen Zeitraum (Tf) umfasst, während dessen das Aktivierungssignal während einer finalen Dauer ($\Delta tf$), bis zum finalen Zeitpunkt (tf), unter den nominalen Pegel ($V_N$) sinkt.

**14.** Sensor nach Anspruch 13, bei dem die finale Dauer zwischen 10 ms und 100 ms und bevorzugt zwischen 20 ms und 50 ms beträgt.

**15.** Sensor nach einem der Ansprüche 10 bis 14, bei dem die Lichtquelle einen Heizfaden umfasst.

**Claims**

**1.** Method for measuring an amount ($c_x$) of a gaseous species ($G_x$) present in a gas, the gaseous species being able to absorb light in an absorption spectral band ($\Delta_x$), the method comprising the following steps:

a) placing the gas between a light source (11) and a measuring photodetector (20), the light source (11) being able to emit a light wave (12), which propagates through the gas to the measuring photodetector (20), the light source being a black-body or grey-body light source;

b) activating the light source (11) so as to illuminate the gas, in such a way that the light source emits a light pulse;

c) measuring, with the measuring photodetector (20), an intensity ($I(k)$), referred to as the measurement intensity, of a light wave (14) transmitted by the gas in the course of its illumination, in a measurement spectral band ($\Delta_{20}$) comprising the absorption spectral band ($\Delta_x$);

the method being **characterized in that** step b) comprises supplying the light source with a pulsed activation signal (V), the activation signal comprising electrical pulses, each electrical pulse extending between an initial time ($t_i$) and a final time (tf), and each electrical pulse comprising:

- an initial period ($T_i$), extending an initial duration ($\Delta t_i$) from the initial time ($t_i$), in the course of which the activation signal (V) is at an initial level ($V_i$);
- a nominal period ($T_N$), after the initial period ($T_i$), in the course of which the activation signal is maintained at a nominal level ($V_N$) strictly lower than the initial level ($V_i$), the nominal period having a nominal duration ($\Delta t_N$) longer than the initial duration ($\Delta t_i$).

2. Method according to Claim 1, wherein the initial duration ($\Delta t_i$) is comprised between 2 and 20 ms, and preferably between 5 ms and 15 ms.

3. Method according to either of the preceding claims, wherein the nominal duration ($\Delta t_N$) is comprised between 20 ms and 150 ms and preferably between 50 ms and 100 ms.

4. Method according to any one of the preceding claims, wherein, during the initial period ($T_i$), the activation signal (V) is maintained at the initial level ($V_i$) during the initial duration ($\Delta t_i$).

5. Method according to any one of the preceding claims, wherein the nominal period ($T_N$) extends to the final time (tf).

6. Method according to any one of Claims 1 to 4, wherein the nominal period ($T_N$) is followed by a final period (Tf), in the course of which the activation signal decreases, below the nominal level ($V_N$), during a final duration ($\Delta tf$), until the final time (tf).

7. Method according to Claim 6, wherein the final duration ($\Delta tf$) is longer than the initial duration ($\Delta t_i$) and/or the final duration ($\Delta tf$) is shorter than the nominal duration ($\Delta t_N$).

8. Method according to either of Claims 6 and 7, wherein, in the course of the final period (Tf), the activation signal gradually decreases until the final time (tf).

9. Method according to any one of Claims 6 to 8, wherein the final duration ($\Delta t_f$) is comprised between 10 ms and 100 ms, and preferably between 20 ms and 50 ms.

10. Sensor (1) for determining an amount ($c_x$) of a gaseous species ($G_x$) in a gas (G), the sensor comprising:

- a light source (11), configured to emit a light wave (12) that propagates to the gas (G), the light wave lying in an absorption spectral band ($\Delta_x$) of the gaseous species ($G_x$), the light source being a black-body or grey-body light source;
- a measuring photodetector (20), able to detect a light wave (14) transmitted by the gas, at various measurement times (k), in a measurement spectral band, and to measure an intensity (I(k)) thereof referred to as the measurement intensity;
- a pulse generator (10), configured to send an activation signal to the light source, the activation signal being formed from pulses, each pulse comprising:

• an initial period ($T_i$), extending an initial duration from the initial time, in the course of which the activation signal is at an initial level ($V_i$);
• a nominal period ($T_N$), after the initial period, in the course of which the activation signal is maintained at a nominal level ($V_N$) strictly lower than the initial level, the nominal period having a nominal duration longer than the initial duration.

11. Sensor according to Claim 10, further comprising:

- a reference photodetector ($20_{ref}$), configured to measure an intensity ($I_{ref}(k)$) referred to as the reference intensity, of a reference light wave ($12_{ref}$) emitted by the light source (11), in a reference spectral band, at the various measurement times (k).

12. Sensor according to either of Claims 10 and 11, wherein:

- the initial duration ($\Delta t_i$) is comprised between 2 and 20 ms, and preferably between 5 ms and 15 ms;
- and/or the nominal duration ($\Delta t_N$) is comprised between 20 ms and 150 ms and preferably between 50 ms and 100 ms.

13. Sensor according to any one of Claims 10 to 12, wherein the pulse generator is configured such that each pulse comprises a final period (Tf), in the course of which the activation signal decreases, below the nominal level ($V_N$), during a final duration ($\Delta tf$), until the final time (tf).

14. Sensor according to Claim 13, wherein the final duration is comprised between 10 ms and 100 ms, and preferably between 20 ms and 50 ms.

15. Sensor according to any one of Claims 10 to 14, wherein the light source comprises a heated filament.

**Fig. 1A**

**Fig. 1B**

Fig. 2A

Fig. 2B

Fig. 2C

Fig. 2D

**Fig. 3A**

**Fig. 3B**

**Fig.3C**

**Fig. 4**

**Fig. 5A**

**Fig. 5B**

**Fig. 6A**

**Fig. 6B**

**EP 3 887 801 B1**

**RÉFÉRENCES CITÉES DANS LA DESCRIPTION**

**Documents brevets cités dans la description**

- US 5026992 A
- WO 2007064370 A
- WO 2018149799 A
- WO 2018162848 A
- DE 10332515 A1
- JP 2004198301 A
- US 6825471 B1
- US 2008114552 A1
- US 4390280 A